# EUROPEAN PATENT SPECIFICATION

(11) **EP 2 834 287 B1**
(45) Date of publication and mention of the grant of the patent: **08.09.2021**
(21) Application number: 13716668.2
(22) Date of filing: 29.03.2013
(51) Int. Cl.: C08G 75/02, C09J 181/02

(54) **POLYTHIOETHER SEALANTS**
POLYTHIOETHERDICHTUNGSMITTEL
MASTICS EN POLYTHIOÉTHER

(30) Priority: 02.04.2012 US 201261619178 P; 13.03.2013 US 201361779393 P
(43) Date of publication of application: 11.02.2015
(73) Proprietor: 3M Innovative Properties Company, St. Paul, MN 55133-3427 (US)
(72) Inventor: YE, Sheng, Saint Paul, Minnesota 55133-3427 (US); DEMOSS, Susan E., Saint Paul, Minnesota 55133-3427 (US); ZOOK, Jonathan D., Saint Paul, Minnesota 55133-3427 (US); WRIGHT, Robin E., Saint Paul, Minnesota 55133-3427 (US)
(74) Representative: Vossius & Partner Patentanwälte Rechtsanwälte mbB
(86) International application number: PCT/US2013/034623
(87) International publication number: WO 2013/151893

(56) References cited:
- EP-A1- 1 629 048
- EP-A1- 1 858 956
- WO-A1-2011/163202
- WO-A1-2012/021781
- WO-A1-2012/021793
- US-A1- 2003 008 977
- US-B1- 6 232 401
- None

## Description

### Field of the Disclosure

This disclosure relates to certain compositions that are radiation curable to polythioether polymers and the polymers so made, which in some embodiments may be useful as sealants.

### Summary of the Disclosure

Briefly, the present disclosure provides a composition that is radiation curable to a polythioether polymer, comprising: a) at least one dithiol monomer; b) at least one diene monomer; c) at least one multifunctional monomer having at least three ethenyl groups; and d) at least one photoinitiator. In some embodiments, the composition additionally comprises e) at least one epoxy resin. In some embodiments, the multifunctional monomer has three ethenyl groups. In some embodiments, the composition additionally comprises n) at least one filler. In some embodiments, the composition additionally comprises o) at least one nanoparticle filler. In some embodiments, the composition additionally comprises p) calcium carbonate. In some embodiments, the composition additionally comprises q) nanoparticle calcium carbonate. In some embodiments, the composition visibly changes color upon cure. In some embodiments, the composition is curable by an actinic light source. In some embodiments, the composition is curable by a blue light source. In some embodiments, the composition is curable by a UV light source.

In another aspect, the present disclosure provides a composition that is radiation curable to a polythioether polymer, comprising: f) at least one dithiol monomer; g) at least one diene monomer; h) at least one multifunctional monomer having at least three thiol groups; and i) at least one photoinitiator. In some embodiments, the composition additionally comprises j) at least one epoxy resin. In some embodiments, the multifunctional monomer has three thiol groups. In some embodiments, the composition additionally comprises n) at least one filler. In some embodiments, the composition additionally comprises o) at least one nanoparticle filler. In some embodiments, the composition additionally comprises p) calcium carbonate. In some embodiments, the composition additionally comprises q) nanoparticle calcium carbonate. In some embodiments, the composition visibly changes color upon cure. In some embodiments, the composition is curable by an actinic light source. In some embodiments, the composition is curable by a blue light source. In some embodiments, the composition is curable by a UV light source.

In another aspect, the present disclosure provides a composition that is radiation curable to a polythioether polymer, comprising: k) at least one thiol terminated polythioether polymer; 1) at least one multifunctional monomer having at least three ethenyl groups; and m) at least one photoinitiator. In some embodiments, the thiol terminated polythioether polymer comprises pendent hydroxide groups. In some embodiments, the multifunctional monomer has three ethenyl groups. In some embodiments, the composition additionally comprises n) at least one filler. In some embodiments, the composition additionally comprises o) at least one nanoparticle filler. In some embodiments, the composition additionally comprises p) calcium carbonate. In some embodiments, the composition additionally comprises q) nanoparticle calcium carbonate. In some embodiments, the composition visibly changes color upon cure. In some embodiments, the composition is curable by an actinic light source. In some embodiments, the composition is curable by a blue light source. In some embodiments, the composition is curable by a UV light source.

In another aspect, the present disclosure provides a sealant comprising any of the compositions described above. In some embodiments, the sealant is transparent. In some embodiments, the sealant is translucent.

In another aspect, the present disclosure provides a polythioether polymer obtained by radiation cure of any the compositions described above. In some embodiments, the polythioether polymer has a Tg less than -55°C.. In some embodiments, the polythioether polymer exhibits high jet fuel resistence characterized by a volume swell of less than 30% and a weight gain of less than 20% when measured according to Society of Automotive Engineers (SAE) International Standard AS5127/1.

In another aspect, the present disclosure provides a seal comprising the polythioether polymer obtained by radiation cure of any the compositions described above. In some embodiments, the polythioether polymer has a Tg less than -55°C.. In some embodiments, the polythioether polymer exhibits high jet fuel resistence characterized by a volume swell of less than 30% and a weight gain of less than 20% when measured according to Society of Automotive Engineers (SAE) International Standard AS5127/1. In some embodiments, the seal is transparent. In some embodiments, the seal is translucent.

EP1629048 B1 and EP1858956 B1 disclose a polythioether obtained by curing a composition comprising: a thiol-terminated polythioether having pendent hydroxide groups; a multifunctional monomer having three ethenyl groups (TAC); and a free-radical catalyst.

### Detailed Description

The present invention is defined in the claims.

The present disclosure relates polythioether sealants. In some embodiments, the present disclosure relates to mercaptan based polythioether sealants containing radical photoinitiators. In some embodiments, the present disclosure relates to sealants that may be cured on demand in a one-step process in seconds by UV/LED radiation sources. In some embodiments, the sealants include fillers. In some embodiments, the sealants exclude fillers. In some embodiments, the sealant formulation contains a mercaptan based monomer (such as a dithiol) or oligomer (such as a linear polythioether or polysulfide), a divinylether, a crosslinker (such as triallylcyanurate), and a radical photoinitiator (such as Irgacure 819). By exposure to light around 450 nm, these compounds are curable in seconds to a rubber with low glass transition temperature (typically less than -55 °C and in many embodiments around -60 °C) and high fuel resistance properties. Use of these formulations has the potential to accelerate manufacturing.

In some embodiments, the sealant according to the present disclosure can simultaneously provide a long application life and cured on demand. In some embodiments, the sealant according to the present disclosure exhibit favorable solvent and fuel resistance properties. In some embodiments, the sealant according to the present disclosure exhibit favorable thermal resistance properties.

In some embodiments, the user applies the sealant according to the present disclosure as a single-component liquid formulation to the structure requiring sealing. In some embodiments, the user applies the sealant according to the present disclosure as a multi-component liquid formulation to the structure requiring sealing. In some embodiments, the sealant remains liquid and usable until the user applies an external source of electromagnetic (EM) radiation. Any suitable source of EM radiation can be used, most typically selected from UV, visible and IR radiation. Upon application of the external EM radiation the liquid sealant then cures or crosslinks. In some embodiments, the sealant cures or crosslinks to an at least partially elastomeric solid in less than one minute.

Objects and advantages of this disclosure are further illustrated by the following examples, but the particular materials and amounts thereof recited in these examples, as well as other conditions and details, should not be construed to unduly limit this disclosure.

### Examples

Unless otherwise noted, all reagents were obtained or are available from Sigma-Aldrich Company, St. Louis, Missouri, or may be synthesized by known methods. Unless otherwise reported, all ratios are by weight percent.

The following abbreviations are used to describe the examples:
- °C:: degrees Centigrade
- cm:: centimeter
- LED:: light emitting diode
- mm:: millimeter
- nm:: nanometer
- T_{g}:: glass transition temperature
- UV:: ultraviolet
- W:: Watt

### Materials.

Abbreviations for the reagents used in the examples are as follows:
- A-200:: A hydrophilic fumed silica, obtained under the trade designation "AEROSIL 200" from Evonik Industries AG, Essen, Germany.
- A-7200:: A methacrylate functionalized fumed silica, obtained under the trade designation "AEROSIL 7200" from Evonik Industries AG.
- CPQ:: Camphorquinone.
- DMDO:: 1,8-Dimercapto-3,6-dioxaoctane, obtained from Arkena, Inc., King of Prussia, Pennsylvania.
- DSW:: An aluminosilicate clay, obtained under the trade designation "DRAGONITE SELECT WHITE" from Applied Minerals, Inc., New York, New York.
- DVE-2:: Diethyleneglycol divinyl ether, obtained from BASF Corp., Florham Park, New Jersey.
- DVE-3:: Triethyleneglycol divinylether, obtained under the trade designation "RAPI-CURE DVE-3" from Ashland Specialty Ingredients, Wilmington, Delaware.
- E-8220:: A diglycidylether of bisphenol F, obtained under the trade designation "EPALLOY 8220" from Emerald Performance Materials, LLC, Cuyahoga Falls, Ohio.
- EDMAB:: Ethyl 4-(dimethylamino) benzoate.
- 1-651:: 2,2-Dimethoxy-1,2-diphenylethan-1-one, obtained under the trade designation "IRGACURE 651" from BASF Corp.
- 1-819:: Phenylbis(2,4,6-trimethylbenzoyl)phosphine Oxide, obtained under the trade designation "IRGACURE 819" from BASF Corp.
- LP-33:: A liquid polysulfide polymer, obtained under the trade designation "THIOKOL LP-33" from Toray Fine Chemicals Co., Ltd., Urayasu, Japan.
- MPMDMS:: 3-mercaptopropyl methyl dimethoxysilane, obtained from Gelest, Inc., Morrisville, Pennsylvania.
- NCC:: 70 - 100 nm calcium carbonate, obtained under the trade designation "SOCAL 31" from Solvay Chemicals, Inc., Houston, Texas.
- PTE:: A liquid polythioether polymer prepared as follows. Into a 5 liter round bottom flask equipped with an air driven stirrer, thermometer, and a condenser, was added 167.1 grams (0.51 mol) E-8220 and 1641 grams (9.0 mol) DMDO. After several minutes of stirring the mixture exothermed to 45°C. After another 30 minutes, the temperature of the flask was increased 75°C and a mixture of 1428.1 grams (7.1 mol) DVE-3, 50.7 grams (0.2 mol) TAC and 13.1 grams (0.07 mol) VAZO-67 was added drop wise. The reaction proceeded substantially to completion affording 3,300 grams of polythioether polymer.
- TAC:: Triallylcyanurate, obtained from Sartomer, Inc., Exton, Pennsylvania.
- TPO-L:: Diphenyl(2,4,6-trimethylbenzoyl)-phosphinic acid ethyl ester, obtained under the trade designation "LUCERIN TPO-L" from BASF Corp.
- VAZO-67:: 2,2'-azobis(2-methylbutyronitrile, obtained under the trade designation "VAZO-67" from E.I. du Dupont de Nemours and Company, Wilmington, Delaware.

### Example 1.

A curable polythioether composition was prepared as follows. A 40 ml. amber glass vial was charged with 7.055 grams DMDO, 5.252 grams DVE-2 and 0.914 grams TAC at 21°C. To this was added 0.132 grams 1-819. The vial was then sealed and placed on a laboratory roller mill for 10 minutes until the 1-819 had dissolved.

### Example 2.

A curable polythioether composition was prepared as generally described in Example 1, wherein, after the resin and initiator were dissolved, 2.003 grams NCC was homogeneously dispersed in the composition by means of a high speed mixer for 1 minute.

### Example 3.

A curable polythioether composition was prepared as follows. A 40 ml. amber glass vial was charged with 5.000 grams PTE and 0.295 grams TAC at 21°C. To this was added 0.053 grams 1-819. The vial was then sealed and placed on the laboratory roller mill for 16 hours until the 1-819 had dissolved.

### Example 4.

A curable polythioether composition was prepared as generally described in Example 1, wherein, after the resin and initiator were dissolved, 0.802 grams NCC was homogeneously dispersed in the composition by means of a high speed mixer for 1 minute.

### Example 5.

A curable polythioether composition was prepared as follows. A 40 ml. amber glass vial was charged with 5.000 grams LP-33 and 0.750 grams TAC at 21°C. To this was added 0.058 grams 1-819. The vial was then sealed and placed on the laboratory roller mill for 16 hours until the 1-819 had dissolved.

### Example 6 (reference).

A curable polythioether composition was prepared as follows. A 40 ml. amber glass vial was charged with 2.000 grams PTE and 0.118 grams TAC at 21°C. To this was added 0.021 grams TPO-L. The vial was then sealed and placed on the laboratory roller mill for 30 minutes until the TPO-L had dissolved.

### Example 7.

A curable polythioether composition was prepared as follows. A 40 ml. amber glass vial was charged with 2.000 grams PTE and 0.118 grams TAC at 21°C. To this was added 0.021 grams 1-651. The vial was then sealed and placed on the laboratory roller mill for 30 minutes until the 1-651 had dissolved.

### Example 8 (reference).

A curable polythioether composition was prepared as follows. A 40 ml. amber glass vial was charged with 2.000 grams PTE and 0.118 grams TAC at 21°C. To this was added 0.021 grams CPQ and 0.021 grams EDMAB. The vial was then sealed and placed on the laboratory roller mill for 16 hours until the CPQ and EDMAB had dissolved.

### Example 9.

A curable polythioether composition was prepared as follows. A 40 ml. amber glass vial was charged with 5.000 grams DMDO, 3.108 grams DVE-2, 1.295 grams TAC and 0.410 grams MPMDMS at 21°C. To this was added 0.094 grams 1-819, the vial then sealed and placed on a laboratory roller mill for 10 minutes until the 1-819 had dissolved. 0.991 grams A-200 was then homogeneously dispersed in the composition by means of a high speed mixer for 1 minute.

### Example 10.

A curable polythioether composition was prepared as generally described in Example 9, wherein the amount of A-200 was increased to 1.487 grams.

### Example 11.

A curable polythioether composition was prepared as generally described in Example 9, wherein the amount of A-200 was increased to 1.982 grams.

### Example 12.

A curable polythioether composition was prepared as generally described in Example 9, wherein the A-200 was substituted with an equal amount of A-7200.

### Example 13.

A curable polythioether composition was prepared as generally described in Example 10, wherein the A-200 was substituted with an equal amount of A-7200.

### Example 14.

A curable polythioether composition was prepared as generally described in Example 11, wherein the A-200 was substituted with an equal amount of A-7200.

### Example 15.

A curable polythioether composition was prepared as generally described in Example 9, wherein the A-200 was substituted with an equal amount of DSW.

### Example 16.

A curable polythioether composition was prepared as generally described in Example 10, wherein the A-200 was substituted with an equal amount of DSW.

### Example 17.

A curable polythioether composition was prepared as generally described in Example 11, wherein the A-200 was substituted with an equal amount of DSW.

### Example 18.

A curable polythioether composition was prepared as generally described in Example 17, wherein the amount of DSW was increased to 2.973 grams.

### Example 19.

A curable polythioether composition was prepared as follows. A 40 ml. amber glass vial was charged with 7.000 grams DMDO, 4.349 grams DVE-2 and 1.812 grams TAC at 21°C. To this was added 0.132 grams 1-819. The vial was then sealed and placed on a laboratory roller mill for 10 minutes until the 1-819 had dissolved.

### Example 20.

A curable polythioether composition was prepared as generally described in Example 1, wherein the amount of 1-819 was increased to 0.264 grams.

### Example 21.

A curable polythioether composition was prepared as generally described in Example 20, wherein after the resin and initiator were dissolved, 2.023 grams NCC was homogeneously dispersed in the composition by means of a high speed mixer for 1 minute.

### Example 22.

A curable polythioether composition was prepared as generally described in Example 3, wherein the amount of 1-819 was increased to 0.106 grams.

### Example 23.

A curable polythioether composition was prepared as generally described in Example 22, wherein after the resin and initiator were dissolved, 2.023 grams NCC was homogeneously dispersed in the composition by means of a high speed mixer for 1 minute.

### Curing Process.

The following actinic light sources were used to cure the Examples and Comparatives: LC-200: A broad range UV spot lamp, model "LIGHTNINGCURE 200 UV SPOT LIGHT SOURCE", obtained from Hamamatsu Photonics, K.K., Hamamatsu City, Japan. Distance between bulb and sample surface distance was 7.62 cm.

NC-385: A 385 nm LED, constructed from LED chips, type "NCSU034B(T), obtained from Nichia Corporation, Tokushima, Japan. Distance between bulb and sample surface distance was 1.27 cm.

STARFIRE MAX: A 395 nm lamp, model "STARFIRE MAX ", obtained from Phoseon Technology, Hillsboro, Oregon. Distance between bulb and sample surface distance was 2.54 cm.

3M-2500: A 400 - 500 nm lamp, model "3M DENTAL 2500", obtained from 3M Company. Distance between bulb and sample surface distance was 0.635 cm. CF2000: A 455 nm LED, model "CF2000", obtained from Clearstone Technologies, Inc., Minneapolis, Minnesota. Distance between bulb and sample surface distance was 0.635 cm.

FUSION H: A broad wavelength 200 - 600 nm mercury UV bulb, obtained from Fusion UV Systems, Inc., Gaithersburg, Maryland. Distance between bulb and sample surface distance was 5.30 cm.

### Test Methods.

The following test methods were used to evaluate the cured samples:
Shore A Hardness: Measured using a model "1600" hardness gauge, obtained from Rex Gauge Company, Inc., Buffalo Grove, Illinois.
T_{g}: Measured using a model "DSC Q2000" differential scanning calorimeter, obtained from TA Instruments, New Castle, Delaware.
Jet Fuel Resistance: Measured according to Society of Automotive Engineers (SAE) International Standard AS5127/1, wherein samples were immersed in Jet Reference Fluid Type 1 (JRF1) for 7 days at 60°C, after which % Swell, % Weight Gain and % Weight Loss were determined. JRF1 composition was, by % volume, 38% toluene, 34% cyclohexane, 38% isooctane and 1% tertiary dibutyl disulfide.
Color Change: Measured before and after curing using a model "MINISCAN XE PLUS D/8S" colorimeter, in mode D65/10*, obtained from Hunter Associates Laboratory, Inc., Reston, Virginia.

Samples were poured into either nominally a 2 by 2 cm or a 2 by 4 cm silicone rubber mold of various heights, at 21°C, and cured by exposure to one of the actinic light sources described above. Resultant thickness, Shore A hardness and T_{g} of the samples were measured. Results listed in Table represent the average of triplicate samples for thickness and Shore A hardness, and duplicate measurements for T_{g}. Selected examples were also subjected to the Jet Fuel Resistance test, and are reported in Table 2. Color change measurements, as an average of three reading and expressed as L*a*b* and ΔE values, are listed in Table 3.

Examples 1, 3, 5-20, and 22 remained translucent at the cured thickness listed in Table 1.

**TABLE 1**

| Sample | Light Source | Cure Time (seconds) | Thickness (mm) | Shore A Hardness | T_{g} (°C) |
|---|---|---|---|---|---|
| Example 1 | LC-200 | 60 | 2.63 | 57.5 | -61 |
| Example 1 | STARFIRE MAX | 60 | 2.14 | 57.5 | -61 |
| Example 1 | 3M-2500 | 60 | 2.31 | 61.0 | -61 |
| Example 1 | CF2000 | 5 | 2.63 | 57.5 | -61 |
| Example 1 | CF2000 | 10 | 2.14 | 57.5 | -61 |
| Example 1 | CF2000 | 15 | 2.31 | 61.0 | -61 |
| Example 1 | CF2000 | 20 | 2.00 | 55.5 | -62 |
| Example 2 | LC-200 | 60 | 1.83 | 66.0 | -62 |
| Example 2 | STARFIRE MAX | 60 | 2.43 | 67.0 | -62 |
| Example 2 | NC-385 | 60 | 2.25 | 65.0 | -62 |
| Example 2 | 3M-2500 | 60 | 1.56 | 70.0 | -62 |
| Example 2 | CF2000 | 10 | 4.20 | 63.0 | -62 |
| Example 3 | LC-200 | 60 | 2.08 | 44.0 | -59 |
| Example 3 | STARFIRE MAX | 60 | 2.00 | 47.0 | -59 |
| Example 3 | 3M-2500 | 60 | 2.18 | 43.0 | -59 |
| Example 3 | CF2000 | 5 | 2.08 | 44.0 | -59 |
| Example 3 | CF2000 | 10 | 2.00 | 47.0 | -59 |
| Example 3 | CF2000 | 15 | 2.18 | 43.0 | -59 |
| Example 3 | CF2000 | 20 | 2.14 | 48.0 | -58 |
| Example 4 | STARFIRE MAX | 60 | 1.84 | 44.0 | -59 |
| Example 4 | 3M-2500 | 60 | 2.02 | 55.0 | -59 |
| Example 5 | STARFIRE MAX | 60 | 2.15 | 60.0 | -59 |
| Example 6 | LC-200 | 300 | 2.30 | 40.0 | -60 |
| Example 6 | 3M-2500 | 600 | 1.30 | 55.0 | -59 |
| Example 6 | CF2000 | 300 | 2.60 | 45.0 | -60 |
| Example 7 | FUSION H | 10 | 1.90 | 46.0 | -60 |
| Example 8 | 3M-2500 | 900 | 1.40 | 54.0 | -60 |
| Example 9 | CF2000 | 30 | 16.36 | 72.0 | -58 |
| Example 10 | CF2000 | 30 | 3.21 | 50.0 | -58 |
| Example 11 | CF2000 | 30 | Not Measured | 55.0 | -57 |
| Example 12 | CF2000 | 30 | 4.21 | 46.0 | -58 |
| Example 13 | CF2000 | 30 | 4.20 | 54.0 | -58 |
| Example 14 | CF2000 | 30 | 1.91 | 60.0 | -57 |
| Example 15 | CF2000 | 30 | 4.60 | 41.0 | -58 |
| Example 16 | CF2000 | 30 | 4.67 | 41.0 | -58 |
| Example 17 | CF2000 | 30 | 4.17 | 45.0 | -60 |
| Example 18 | CF2000 | 30 | 3.54 | 46.0 | -60 |
| Example 19 | CF2000 | 30 | 44.15 | 57.5 | -56 |

**TABLE 2**

| Sample | Light Source | Cure Time (seconds) | % Swell | % Weight Gain | % Weight Loss |
|---|---|---|---|---|---|
| Example 1 | STARFIRE MAX | 60 | 22.5 | 16.5 | 3.4 |
| Example 1 | CF2000 | 10 | 21.7 | 15.6 | 3.8 |
| Example 2 | NC-385 | 60 | 21.5 | 14.6 | 2.9 |
| Example 3 | LC-200 | 60 | 20.8 | 13.9 | 6.9 |
| Example 3 | CF2000 | 10 | 21.5 | 14.8 | 6.1 |
| Example 4 | STARFIRE MAX | 60 | 22.1 | 14.5 | 5.2 |
| Example 10 | CF2000 | 30 | 19.6 | 12.2 | 2.8 |
| Example 13 | CF2000 | 30 | 15.6 | 12.9 | 2.9 |
| Example 16 | CF2000 | 30 | 15.9 | 11.0 | 4.3 |

**TABLE 3**

| Example | Curing Step | L* | a* | b* | ΔE |
|---|---|---|---|---|---|
| 20 | Before | 88.04 | -10.89 | 23.92 | 17.09 |
| | After | 88.02 | -3.95 | 8.30 | |
| 21 | Before | 85.57 | -11.35 | 19.35 | 16.31 |
| | After | 83.84 | -4.44 | 4.68 | |
| 22 | Before | 88.35 | -10.27 | 25.67 | 16.16 |
| | After | 86.46 | -4.11 | 10.85 | |
| 23 | Before | 85.58 | -10.22 | 21.67 | 15.07 |
| | After | 84.75 | -4.42 | 7.79 | |

## Claims

1. A composition that is radiation curable to a polythioether polymer, comprising:
k) at least one thiol terminated polythioether polymer which comprises pendent hydroxide groups;
l) at least one multifunctional monomer having at least three ethenyl groups; and
m) at least one photoinitiator selected from 2,2-dimethoxy-1,2-diphenylethan-1-one and phenylbis(2,4,6-trimethylbenzoyl)phosphine oxide.

2. The composition according to claim 1, wherein said at least one multifunctional monomer has three ethenyl groups.

3. The composition according to any of the preceding claims, additionally comprising:
n) at least one filler.

4. The composition according to any of the preceding claims, additionally comprising:
o) at least one nanoparticle filler.

5. A sealant comprising the composition according to any of the preceding claims.

6. The sealant according to claim 5 which is translucent.

7. A polythioether polymer obtained by radiation cure of any of the composition according to any of claims 1-4.

8. The polythioether polymer according to claim 7 having a Tg of less than -55°C.

## Patentansprüche

1. Eine Zusammensetzung, die durch Strahlng zu einem Polythioetherpolymer härtbar ist, umfassend:
k) mindestens ein thiolterminiertes Polythioetherpolymer, das anhängige Hydroxidgruppen umfasst;
l) mindestens ein multifunktionelles Monomer mit mindestens drei Ethenylgruppen; und
m) mindestens einen Photoinitiator, der aus 2,2-Dimethoxy-1,2-diphenylethan-1-on und Phenylbis(2,4,6-trimethylbenzoyl)phosphinoxid ausgewählt ist.

2. Die Zusammensetzung nach Anspruch 1, wobei das mindestens eine multifunktionelle Monomer drei Ethenylgruppen aufweist.

3. Die Zusammensetzung nach einem der vorstehenden Ansprüche, zusätzlich umfassend:
n) mindestens einen Füllstoff.

4. Die Zusammensetzung nach einem der vorstehenden Ansprüche, zusätzlich umfassend:
o) mindestens einen Nanoteilchenfüllstoff.

5. Ein Dichtungsmittel, das die Zusammensetzung nach einem der vorstehenden Ansprüche umfasst.

6. Das Dichtungsmittel nach Anspruch 5, das lichtdurchlässig ist.

7. Ein Polythioetherpolymer, das durch Strahlungshärten einer der Zusammensetzungen nach einem der Ansprüche 1 bis 4 erhalten wird.

8. Das Polythioetherpolymer nach Anspruch 7, das eine Tg von weniger als -55 °C aufweist.

## Revendications

1. Composition qui est durcissable par rayonnement en un polymère polythioéther, comprenant :
k) au moins un polymère de polythioéther à terminaison thiol qui comprend des groupes hydroxydes pendants ;
l) au moins un monomère multifonctionnel ayant au moins trois groupes éthényle ; et
m) au moins un photo-initiateur choisi parmi 2,2-diméthoxy-1,2-diphényléthan-1-one et l'oxyde de phénylbis (2, 4, 6-triméthylbenzoyl) phosphine.

2. Composition selon la revendication 1, dans laquelle ledit au moins un monomère multifonctionnel possède trois groupes éthényle.

3. Composition selon l'une quelconque des revendications précédentes, comprenant en outre :
n) au moins une charge.

4. Composition selon l'une quelconque des revendications précédentes, comprenant en outre :
o) au moins une charge nanoparticulaire.

5. Mastic comprenant la composition selon l'une quelconque des revendications précédentes.

6. Mastic selon la revendication 5, qui est translucide.

7. Polymère polythioéther obtenu par durcissement par rayonnement d'une quelconque composition selon l'une quelconque des revendications 1 à 4.

8. Polymère polythioéther selon la revendication 7 ayant une Tg inférieure à -55 °C.
